# EUROPÄISCHE PATENTSCHRIFT

(11) **EP 2 798 931 B1**
(45) Veröffentlichungstag und Bekanntmachung des Hinweises auf die Patenterteilung: **01.08.2018**
(21) Anmeldenummer: 14169064.4
(22) Anmeldetag: 25.03.2010
(51) Int. Cl.: A01D 7/10

(54) **Fächerbesen**
Fan rake
Balai à gazon

(43) Veröffentlichungstag der Anmeldung: 05.11.2014
(62) Teilanmeldung aus: 10713417.3
(73) Patentinhaber: Husqvarna AB, 561 82 Huskvarna (SE)
(72) Erfinder: Arndt, Wolfgang, 89079 Ulm (DE); Schaffer, Karin, 89250 Senden (DE)
(74) Vertreter: Finkele, Rolf

(56) Entgegenhaltungen:
- DE-A1- 2 830 945
- DE-U1- 8 414 684
- US-A- 5 927 058
- US-B1- 7 131 255

## Beschreibung

Die Erfindung betrifft einen Fächerbesen mit zwei Teilfächern.

Fächerbesen mit zwei Teilfächern ermöglichen insbesondere das Aufnehmen von Laub oder dergleichen, indem mit den Teilfächern der beiden voneinander gelösten Teile von dem Benutzer Kehrgut, wie z. B. Laub oder Grasschnitt zangenartig umfasst und zwischen den Teilfächern gehalten vom Boden aufge-nommen werden kann.

Teilbare Fächerbesen sind beispielsweise bekannt aus EP 1 100 304 B1, US 5 440 868, US 6 101 799, US 6 339 919 B1. Bei einem in US 7 131 255 B1 beschriebenen teilbaren Fächerbesen ist an den Teilkörpern jeweils ein Handgriff zur getrennten Handhabung der beiden Teile vorgesehen. Bekannt sind auch Fächerbesen mit relativ zueinander schwenkbaren Teilfächern, welche wie z. B. in der US 6 283 521 B1, der US 6 101 799, der US 5 927 058, der US 5 414 982 oder der WO 02/102 137 A1 über Führungen und einen benutzerbetätigbaren Griff zu einer Zangenform zusammenschwenkbar sind, um Laub oder dergleichen vom Boden aufzunehmen. Ein in der US 3 855 766 beschriebener Fächerbesen ist von einer breiten Laubrechenform in eine schmale Schrubberbesenform umwandelbar.

Der Erfindung liegt die Aufgabe zugrunde, einen zwei Teilfächer enthaltenden Fächerbesen mit weiter verbesserter Handhabbarkeit anzugeben.

Die Erfindung ist im unabhängigen Anspruch beschrieben. Die abhängigen Ansprüche enthalten vorteilhafte Ausgestaltungen und Weiterbildungen der Erfindung.

Durch die Verbindung der beiden Teilkörper, an welchen jeweils ein Teilfächer des Gesamtfächers angeordnet ist, und durch die Verschwenkbarkeit zwischen einer Arbeitsstellung und einer Aufbewahrungsstellung kann vorteilhafterweise in der Aufbewahrungsstellung ein wesentlich günstigeres Volumen als Einhüllende des Fächerbesens erreicht werden, insbesondere hinsichtlich der Breite des Fächerbesens, welcher in der Aufbewahrungsstellung vorzugsweise nicht mehr als 60 % der Breite in der Arbeitsstellung beträgt. Dies ist insbesondere auch von Vorteil bei der Vorhaltung mehrerer Fächerbesen in Fachgeschäften und bei einer eventuell den Fächerbesen in der Aufbewahrungsstellung umgebenden Verpackung. Die beiden Teilkörper des Fächerbesens sind dabei in der Arbeitsstellung und in die Aufbewahrungsstellung miteinander verbunden, insbesondere über die Schwenkgelenkanordnung. Vorteilhafterweise bleibt eine Verbindung der beiden Teilkörper über den gesamten Schwenkbereich zwischen Arbeitsstellung und Aufbewahrungsstellung erhalten, so dass die Handhabung für den Benutzer bei Wechseln zwischen Arbeitsstellung und Aufbewahrungsstellung besonders einfach ist. Der Schwenkwinkel zwischen Arbeitsstellung und Aufbewahrungsstellung, welche insbesondere Endstellungen der Verschwenkbarkeit der beiden Teilkörper darstellen können, ist vorteilhafterweise größer als 150° und liegt vorzugsweise bei ca. 180°. Insbesondere in der Arbeitsstellung kann eine Festlegung der beiden Teilkörper zueinander durch manuell lösbare Verriegelungsmittel vorgesehen sein.

Die beiden Teilkörper sind vorteilhafterweise sowohl in der Arbeitsstellung als auch in der Aufbewahrungsstellung nicht voneinander lösbar und ein Lösen der Teilkörper voneinander ist vorzugsweise auf eine durch einen Winkelbereich zwischen der Arbeitsstellung und der Aufbewahrungsstellung gegebene Lösestellung beschränkt. Eine solche Lösestellung ist vorteilhafterweise um wenigstens 30°, insbesondere wenigstens 45° in Schwenkrichtung von der Arbeitsstellung und von der Aufbewahrungsstellung beabstandet. Eine Lösestellung kann insbesondere bei dem halben Winkel der gesamten Verschwenkbarkeit liegen.

Durch die nicht gegebene Lösbarkeit in der Arbeitsstellung und in der Aufbewahrungsstellung wird ein versehentliches Lösen der beiden Teilkörper voneinander weitgehend vermieden. Vorteilhafterweise ist auch in der Lösestellung eine angewollte Trennung beim Durchschwenken durch die Lösestellung dadurch vermieden, dass in der Lösestellung eine zusätzliche Haltekraft, insbesondere quer zu der Schwenkachse, zwischen den beiden Teilkörper gegeben ist, welche bewusst manuell überwunden werden muss. Hierfür kann insbesondere ein elastisch verformbares Halteelement vorgesehen sein, welches vorzugsweise zugleich einen Teil der Gelenkanordnung bilden kann. Insbesondere kann ein solches Halteelement durch eine Klammer an einem der beiden Teilkörper gebildet sein, welche eine Schwenkachse um mehr als 180° umgreift und quer zur Schwenkachse offen ist und unter elastischer Aufweitung quer zur Schwenkachse von dieser abziehbar ist. Zugleich bleibt durch die in der Lösestellung gegebene Möglichkeit der Trennung der beiden Teilkörper voneinander die Benutzung der Teilkörper mit den Teilfächern als zwei Werkzeuge erhalten.

Vorteilhafterweise stehen in der Aufbewahrungsstellung die Teilfächer mit den die einander zu gewandten Enden der Zinken auf Lücke und die typischerweise abgewinkelten Zinken dem eines Teilfächers greifen jeweils in die Lücken zwischen benachbarten Zinkenenden des anderen Teilfächers ein.

Der Fächerbesen ist vorteilhafterweise in der Arbeitsstellung annähernd spiegelsymmetrisch bezüglich einer durch die Schwenkachse gehenden Mittelebene aufgebaut, wobei aber vorteilhafterweise eine geringe Abweichung von der exakten Spiegelsymmetrie bewusst vorgesehen ist, um das vorstehend genannte Ineinandergreifen von in der Aufbewahrungsstellung auf Lücke zueinander stehenden Zinkenenden zu bewirken.

Die Trennstelle der beiden Teilfächer ist in der Arbeitsstellung vorteilhafterweise seitlich um wenigstens einen Zinkenabstand gegen eine die Ausrichtung der Schwenkachse enthaltende Mittelebene versetzt. Die beiden Teilfächer umfassen vorteilhafterweise jeweils zwischen 40 % und 60 % der Breite des Gesamtfächers und sind in bevorzugter Ausführung in der Weise unterschiedlich groß ausgeführt, dass bei annähernder Spiegelsymmetrie des Gesamtfächers bezüglich einer die Achsrichtung der Schwenkachse enthaltenden Mittelebene einer der Teilfächer sich mit wenigstens einem, vorzugsweise zwei Zinken über die Mittelebene in Richtung des anderen Teilfächers hinaus erstreckt und der der Mittelebene nächste Zinken des anderen Teilfächers entsprechend weiter von der Mittelebene beabstandet ist. Die Schwenkgelenkanordnung kann vorteilhafterweise ein Rohr als Schwenkachse enthalten, welches fest, insbesondere auch um die Rohrachse drehfest mit einem ersten der beiden Teilkörper verbunden sein kann. An dem den Zinken des Teilfächers dieses ersten Teilkörpers abgewandten Ende der Schwenkachse kann vorteilhafterweise eine Verbindungseinrichtung für einen Gerätestiel vorgesehen sein, welche insbesondere für ein manuell werkzeugloses Anbringen und Abnehmen eines Gerätestiels ausgebildet sein kann, beispielsweise nach Art des GARDENA Combi-Systems.

Zwischen den beiden Teilkörpern können in der Arbeitsstellung vorteilhafterweise zusätzlich zu der Verbindung der Teilkörper über die Gelenkanordnung und über eventuelle Verriegelungsmittel noch Zentrierstrukturen vorgesehen sein, welche eine Verlagerung der beiden Teilkörper relativ zueinander, insbesondere quer zur Schwenkachse beispielsweise durch elastische Verformung der Teilkörper bei Belastung, blockieren. Solche Zentrierstrukturen, welche insbesondere durch korrespondierende Vorsprünge und Vertiefungen gegen in der Arbeitsstellung einander anliegenden Flächen der beiden Teilkörper ausgeführt sein können, treten vorteilhafterweise beim Verschwenken der Teilkörper in die Arbeitsstellung selbsttätig in gegenseitigen formschlüssigen Eingriff und rücken bei Verschwenken aus der Arbeitsstellung ohne gesonderte manuelle Entsperrung aus dem formschlüssigen Eingriff aus.

Die beiden Teilkörper sind vorteilhafterweise als Kunststoff-Spritzgusskörper ausgeführt, insbesondere einstückig mit den ihnen jeweils zugeordneten Teilfächern. An einem oder beiden Teilkörpern kann jeweils eine Handgriffanordnung vorgesehen sein.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Fächerbesen in Schrägansicht von vorn,
- Fig. 2: den Fächerbesen nach Fig. 1 in Frontalansicht von vorn,
- Fig. 3: den Fächerbesen nach Fig. 1 in Schrägansicht von der Stielseite her,
- Fig. 4: den Fächerbesen nach Fig. 3 zu Beginn einer Schwenkbewegung,
- Fig. 5: einen Schnitt durch Fig. 4 mit Blick in Richtung der Schwenkachse,
- Fig. 6: eine Zwischenstellung der Schwenkbewegung,
- Fig. 7: den Fächerbesen nach Fig. 3 in Aufbewahrungsstellung,
- Fig. 8: eine Frontalansicht zu Fig. 7,
- Fig. 9: den Fächerbesen nach Fig. 6 in Lösestellung,
- Fig. 10: eine Schnittdarstellung zu Fig. 9 mit Blick in Richtung der Schwenkachse.

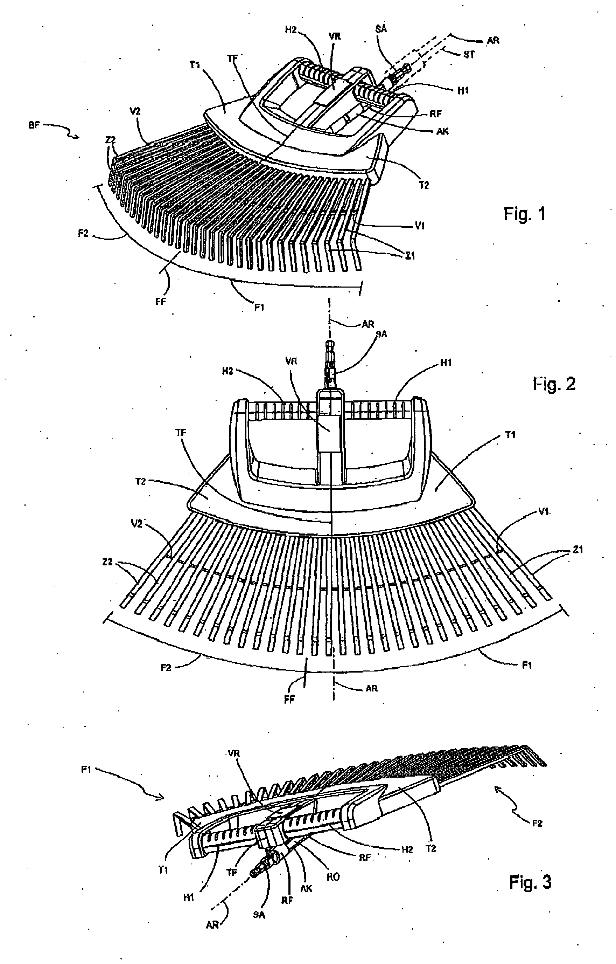

Fig. 1 zeigt in Schrägansicht von vorne einen erfindungsgemäßen Fächerbesen, bei welchem ein lösbar befestigbarer Stiel ST lediglich mit unterbrochenen Linien angedeutet ist. Der Stiel ST ist über eine werkzeuglos betätigbare Schnellkupplung SK mit einem korrespondierendem Stielansatz SA an dem Fächerbesen verbindbar. Derartige verdrehsichere und einfach zu bedienende Schnellkupplungen sind beispielsweise aus dem GARDENA-Combi-System bekannt.

Der in Fig. 1 dargestellte Fächerbesen weist in an sich gebräuchlicher Weise einen Besenfächer BF mit einer Vielzahl von sternförmig von einem Trägerkörper abstehenden und an ihren Enden abgewinkelten Zinken auf. Der Trägerkörper ist entlang einer Trennfuge TF unterteilt in zwei Teilkörper T1 und T2. An den beiden Teilkörpern T1 und T2 sind Handgriffanordnungen H1 und H2 ausgebildet. Der Besenfächer BF ist in zu der Unterteilung des Trägerkörpers entsprechender Weise in zwei Teilfächer F1 und F2 unterteilt, wobei der Teilfächer F1 an dem Trägerkörper T1 und der Teilfächer F2 an dem Trägerkörper T2 angeordnet ist. Beide Teilfächer F1 und F2 weisen innerhalb ihrer jeweils mehreren Zinken Z1 bzw. Z2 Verbindungsstege V1 bzw. V2 zur Verbindung benachbarter Zinken in einer Position zwischen dem jeweils zugeordneten Trägerkörper und den freien Zinkenenden auf. An einer Trennstelle FF zwischen den beiden Teilfächern benachbart liegende Zinken verschiedener Teilfächer sind nicht über Stege miteinander verbunden.

Aus der Frontalansicht nach Fig. 2 ist deutlich erkennbar, dass die Trennstelle FF der sich zu dem Gesamtfächer BF ergänzenden Teilfächer F1, F2 nicht mit der Verlängerung der Trennfuge TF zwischen den beiden Teilkörpern T1 und T2 zusammenfällt, sondern seitlich zum Teilfächer F2 hin gegen eine solche Verlängerung der Trennfuge versetzt ist. Die Verlängerung der Trennfuge TF sei durch eine Achsrichtung AR repräsentiert, welche die Achsrichtung einer Schwenkachse einer Schwenkgelenkanordnung, über welche die beiden Teilkörper T1 und T2 schwenkbar verbunden sind, angibt. Die Trennfuge liege in einer die Achsrichtung AR enthaltenden, senkrecht zur Zeichenebene der Fig. 2 verlaufenden Mittelebene.

Die Schwenkgelenkanordnung enthält in bevorzugter Ausführungsform ein Rohr RO, welches in der Ansicht nach Fig. 3 abschnittsweise erkennbar ist. Das Rohr RO ist in Halterungen RF fest, insbesondere auch drehtest mit dem Teilkörper T1 verbunden. Der Stielanschluss SA ist an dem den Fächerzinken abgewandten Ende des Rohres mit diesem verbunden. Das Rohr RO ist vorteilhafterweise in zwei in Achsrichtung AR voneinander beabstandeten Halterungen RF des ersten Teilkörpers T1 gehalten, wodurch sich eine besonders stabile Verbindung zwischen einem Stiel und dem Teilkörper T1 ergibt. Vorteilhafterweise ist der größere Teilfächer F1 der beiden Teilfächer F1, F2 an dem besonders stabil mit einer Stielanordnung verbundenen ersten Teilkörper T1 angeordnet.

Der zweite Teilkörper ist gelenkig um die Achsrichtung AR schwenkbar an dem Rohr RO gehalten und weist hierfür vorteilhafterweise Klammern AK auf, welche das Rohr RO als Achse der Gelenkanordnung umgreifen, wobei die Klammern AK das Rohr RO vorteilhafterweise um mehr als 180° umgreifen. Die Klammern AK sind vorteilhafterweise in einer Richtung seitlich offen. In Fig. 3 ist ein Abschnitt des Rohres RO durch diese Öffnungen der Klammern AK sichtbar. Die Öffnung der Klammern AK weist vorteilhafterweise in der in Fig. 3 dargestellten Arbeitsstellung des Fächerbesens von der Trennfuge TF des Trägerkörpers weg. Ein Lösen des Trägerkörpers T2 von dem Rohr RO bzw. von dem Trägerkörper T1 ist dadurch in der in Fig. 3 dargestellten Arbeitsstellung des Fächerbesens nicht möglich.

Die beiden Teilkörper T1, T2 sind in der in Fig. 1 bis Fig. 3 dargestellten Arbeitsstellung vorteilhafterweise durch manuell lösbare Verriegelungsmittel VR relativ zueinander festgelegt. Die Verriegelungsmittel VR können beispielsweise eine in Fig. 2 aus der Zeichenebene auf den Betrachter zu manuell verschwenkbare Riegelklappe enthalten, nach deren manueller Hochschwenkung die Verriegelung der beiden Teilkörper T1, T2 aufgehoben ist und die Teilkörper T1, T2 um die Achsrichtung AR der Gelenkanordnung relativ zueinander verschwenkbar sind.

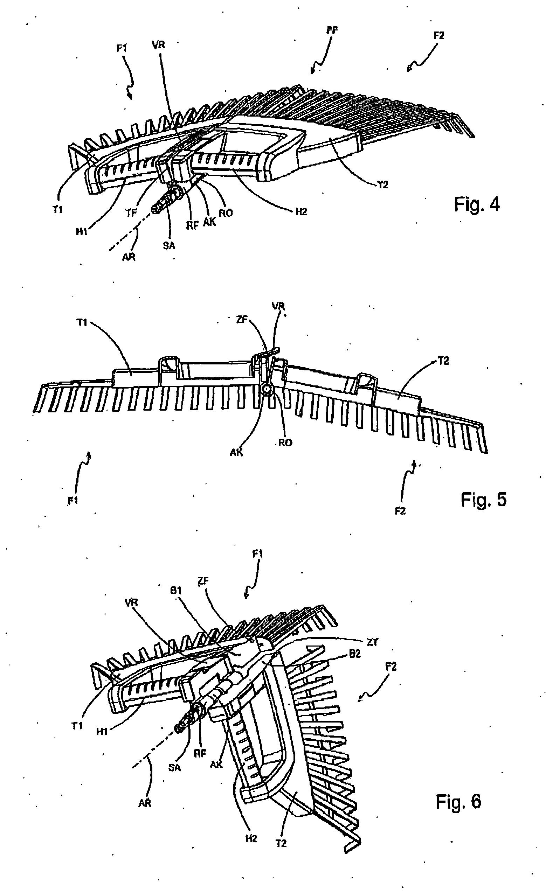

Fig. 4 zeigt in zu Fig. 3 analoger Blickrichtung den Fächerbesen nach Lösen der Verriegelungsmittel VR und anfänglicher leichter Verkippung des Teilkörpers T2 gegenüber der Arbeitsstellung in Fig. 3. An der Trennfuge TF rücken die beiden Teilkörper voneinander weg. In entsprechender Weise verlagern sich die jeweils mit einem der Teilkörper fest verbundenen Teilfächer F1 und F2 bei der Verschwenkung relativ zueinander. Fig. 5 zeigt einen Schnitt durch Fig. 4 in einer senkrecht zur Achsrichtung AR verlaufenden Schnittebene durch die Verriegelungseinrichtungen mit Blickrichtung von der Seite des Stielanschlusses SA in Achsrichtung AR. Die schwenkbare Klappe der Verriegelungsmittel VR ist in der angehobenen Stellung. Beim Zurückschwenken der Teilkörper T1, T2 um das Rohr RO als Schwenkachse in die Arbeitsstellung nach Fig. 1 bis Fig. 3 rasten die Verriegelungsmittel vorteilhafterweise selbsttätig ein, um eine Verriegelung der beiden Teilkörper herzustellen.

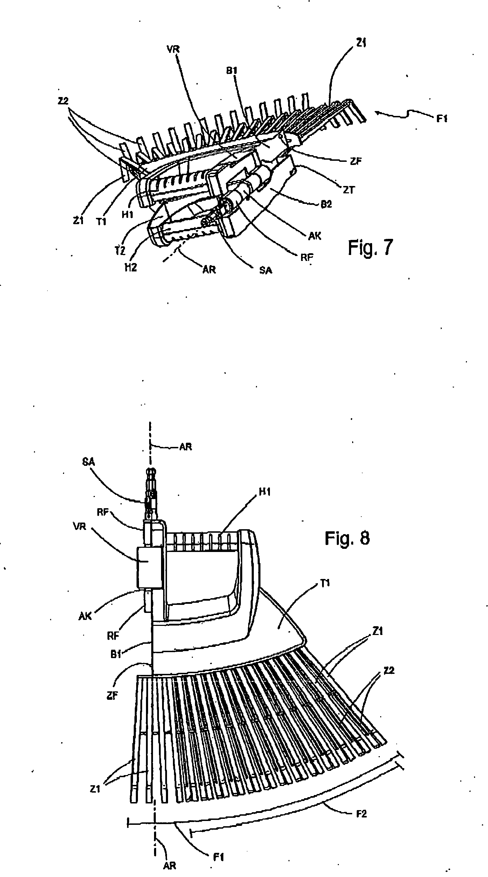

Fig. 6 zeigt eine Zwischenstellung der Schwenkbewegung zwischen der Arbeitsstellung nach Fig. 1 bis Fig. 3 und einer anhand von Fig. 7 und Fig. 8 noch zu beschreibenden Aufbewahrungsstellung. Die Teilkörper T1, T2 sind in der in Fig. 6 dargestellten Zwischenstellung um ca. 90° gegenüber ihrer Arbeitsstellung nach Fig. 1 bis Fig. 3 relativ zueinander um die Achsrichtung AR verschwenkt. Die Öffnungen der Klammern AK des zweiten Teilkörpers T2 weisen in dieser Position in der in Fig. 6 gewählten Ansicht nach unten und sind daher für den Betrachter nicht sichtbar. An einer Anlagefläche B1 des ersten Teilkörpers ist ein Zentrierfortsatz ZF ausgebildet, welcher komplementär zu einer Vertiefung ZT gegen eine Anlagefläche B2 an dem zweiten Teilkörper T2 ausgebildet ist. Die Anlageflächen B1 und B2 liegen in der in Fig. 1 bis Fig. 3 dargestellten Arbeitsstellung des Fächerbesens einander gegenüber und der Vorsprung ZF greift in die Vertiefung ZT ein. Vorsprung ZF und Vertiefung ZT bilden neben weiteren Positionierstrukturen vorteilhafterweise Zentriereinrichtungen nahe bei den Zinken der Teilfächer F1, F2 und stabilisieren so die Lage der beiden Teilfächer in der Arbeitsstellung relativ zueinander.

In Fig. 7 ist der Schwenkvorgang fortgesetzt bis zu einer der Arbeitsstellung nach Fig. 1 als erster Endstellung entgegen gesetzten zweiten Endstellung der Schwenkbewegung, in welcher die Teilkörper T1 und T2 gegenüber der in Fig. 1 bis Fig. 3 dargestellten Arbeitsstellung um ca. 180° gegeneinander um die Achsrichtung AR verschwenkt sind. Die Ebenen der den Teilkörpern T1 bzw. T2 zugewandten Abschnitte der Zinken der Teilfächer F1, F2 liegen im wesentlichen parallel zueinander und die abgewinkelten Enden der Zinken Z1 des ersten Teilfächers und Z2 des zweiten Teilfächers greifen durch Lücken des jeweils anderen Teilfächers hindurch. Aus der Frontalansicht nach Fig. 8 ist ersichtlich, dass die Zinken Z1 des ersten Teilfächers F1 und die Zinken Z2 des zweiten Teilfächers Z2 zumindest in den Bereichen der abgewinkelten Zinkenenden auf Lücke zueinander angeordnet sind. Der Teilfächer F2 erstreckt sich über einen kleineren Winkelbereich als der Teilfächer F1. Der kleinere der beiden Teilfächer beansprucht vorteilhafterweise wenigstens 40 % der Breite des gesamten Besenfächers BF.

In der in Fig. 7 und Fig. 8 dargestellten Aufbewahrungsposition des Fächerbesens beträgt dessen Breite quer zur Achsrichtung AR nur noch wenig mehr als die Hälfte der ursprünglichen Breite des Fächerbesens in der in Fig. 1 bis Fig, 3 dargestellten Arbeitsstellung. Es ergibt sich somit eine zu Aufbewahrungs-, Transport- und Verpackungszwecken besonders kompakte Einheit. Die Öffnungen der Klammern AK weisen in der Darstellung nach Fig. 7 nach links in Richtung der beiden Teilkörper. Ein Lösen der beiden Teilkörper voneinander ist aber dennoch nicht ohne weiteres möglich, da die Zinken der Teilfächer F1, F2 ineinander greifen.

In einer Zwischenstellung der Schwenkbewegung zwischen der Arbeitsstellung nach Fig. 1 bis Fig. 3 und der Aufbewahrungsstellung nach Fig. 7 und Fig. 8 können die Teilkörper T1, T2 voneinander gelöst werden. Eine solche Zwischenstellung ist beispielsweise in der Stellung nach Fig. 6 gegeben. Eine solche Zwischensteilung, in welcher die beiden Teilkörper T1, T2 voneinander gelöst werden können, sei nachfolgend als Lösestellung bezeichnet. Eine solche Lösestellung ist vorteilhafterweise sowohl von der Aufbewahrungsstellung als auch von der Arbeitsstellung durch einen Differenzwinkel der Schwenkbewegung beabstandet. Ein solcher Differenzwinkel beträgt im skizzierten Beispiel ca. 90° gegen die Arbeitsstellung nach Fig. 1 bis Fig. 3 und wegen des gegenseitigen Eingriffs der Zinken ca. 45° gegen die Aufbewahrungsstellung.

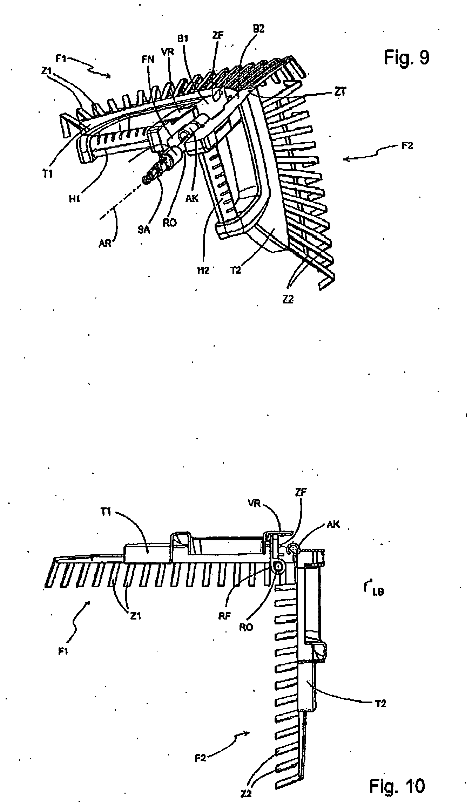

Ausgehend von der Zwischenstellung nach Fig. 6, welche in diesem Fall die Lösestellung bildet, kann durch eine in Fig. 10 mit LB bezeichnete zweistufige Verschiebung zuerst die Verbindung der Klammern AK mit dem Rohr RO gelöst werden, wobei die Klammern AK elastisch aufgeweitet und hierfür vom Benutzer eine die Haltekraft überwindende Benutzerkraft in Richtung des ersten Pfeils der Bewegungsfolge LB aufgebracht werden muss. Nachdem die Klammern AK von dem Rohr RO gelöst sind, kann der zweite Teilkörper T2 mit dem zweiten Teilfächer F2 von dem ersten Teilkörper T1 mit dessen erstem Teilfächer F1 gelöst und selbständig gehandhabt werden. Für das erneute Zusammenfügen kann vorteilhafterweise die in der Arbeitsstellung die Trennfuge TF zwischen den Teilkörpern T1, T2 begrenzende Anlagefläche B1 des Teilkörpers T1 eine Führungsstruktur FN in Form einer Vertiefung gegen die Anlagefläche B1 aufweisen. Die Klammern AK können zum Herstellen der Verbindung zwischen den beiden Teilkörpern T1, T2 ausgehend von der in Fig. 9 und Fig. 10 dargestellten relativen Position der beiden Teilkörper in die Vertiefung bis zum Anschlag der Klammern AK am Boden der Vertiefung eingesetzt werden und sind dabei bezüglich des Rohres RO sowohl in axialer Richtung als auch quer zur axialen Richtung vororientiert, so dass der zweite Teilkörper T2 nur noch mit entlang der Bodenfläche der Vertiefung FN geführten Klammern AK auf das Rohr RO zu bewegt und die Klammern AK schnappend auf das Rohr RO aufgedrückt werden müssen. Danach können die Teilkörper T1, T2 in die Arbeitsstellung oder in die Aufbewahrungsstellung relativ zueinander um das Rohr RO als Schwenkachse verschwenkt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fächerbesen mit einem Trägerkörper und einer Mehrzahl von Zinken, welche einen von dem Trägerkörper abstehenden Gesamtfächer bilden, wobei der Trägerkörper in zwei Teilkörper unterteilt ist, welche in einem Schwenkgelenk mit einer Schwenkachse relativ zueinander verschwenkbar sind und an welchen jeweils mehrere Zinken als Teilfächer angeordnet sind,
wobei die beiden Teilkörper (T1, T2) aus einer Arbeitsstellung, in welchem sich die Teilkörper zu dem Trägerkörper und die Teilfächer (F1, F2) zu einem Gesamtfächer (BF) ergänzen, durch Verschwenkung um die Schwenkgelenkanordnung in eine Aufbewahrungsstellung mit einander gegenüber stehenden Teilkörper (T1, T2) und Teilfächern (F1, F2) verlagerbar sind,
wobei die Schwenkgelenkanordnung einen Stab oder ein Rohr (RO) als Schwenkachse enthält, welcher fest mit einem der Teilkörper (T1) verbunden ist, wobei die Schwenkachse (RO) an ihrem dem Gesamtfächer abgewandten Ende eine Verbindungsstruktur (SA) zum werkzeuglosen Anbringen und Abnehmen eine Gerätestiels (ST) trägt, und wobei der zweite Teilkörper (T2) gelenkig um die Achsrichtung (AR) schwenkbar an der Schwenkachse gehalten ist
**dadurch gekennzeichnet,**
**dass** der zweite Teilkörper (T2) manuell werkzeuglos lösbar an der Schwenkachse gehalten ist.

2. Fächerbesen nach Anspruch 1, **dadurch gekennzeichnet, dass** der Schwenkwinkel zwischen Arbeitsstellung und Aufbewahrungsstellung wenigstens 150°, insbesondere ca. 180° beträgt.

3. Fächerbesen nach Anspruch 2, **dadurch gekennzeichnet, dass** die Teilkörper (T1, T2) nur in einer um einen Schwenkwinkel von der Arbeitsstellung und der Aufbewahrungsstellung beabstandeten Zwischenstellung als Lösestellung voneinander lösbar sind.

4. Fächerbesen nach Anspruch 3, **dadurch gekennzeichnet, dass** die Lösestellung um einen Schwenkwinkel von wenigstens 45° gegen die Arbeitsstellung und die Aufbewahrungsstellung versetzt ist.

5. Fächerbesen nach einem der Ansprüche 1 bis 4, **dadurch gekennzeichnet, dass** der Gesamtfächer (BF) annähernd spiegelsymmetrisch bezüglich einer die Schwenkachse (AR) enthaltenden Mittelebene ist.

6. Fächerbesen nach einem der Ansprüche 1 bis 5, **dadurch gekennzeichnet, dass** in der Aufbewahrungsstellung die Zinken (Z1, Z2) der beiden Teilfächer (F1, F2) zueinander auf Lücke stehen und die beiden Teilfächer bei den Zinkenenden ineinander greifen.

7. Fächerbesen nach einem der Ansprüche 1 bis 6, **dadurch gekennzeichnet, dass** die Trennstelle (FF) zwischen den beiden Teilfächern gegen die Verlängerung der Schwenkachse (AR) um wenigstens einen Zinkenabstand versetzt ist.

8. Fächerbesen nach einem der Ansprüche 3 bis 7, **dadurch gekennzeichnet, dass** in der Lösestellung die Teilkörper (T1, T2) mit einer relativen Bewegung (LB) quer zur Schwenkachse (AR) voneinander lösbar sind.

9. Fächerbesen nach einem der Ansprüche 1 bis 8, **dadurch gekennzeichnet, dass** die Schwenkachse (RO) mit einem ersten der beiden Teilkörper (T1) fest verbunden ist (RF) und der zweite Teilkörper (T2) in der Lösestellung von der Schwenkachse (RO) lösbar ist.

10. Fächerbesen nach Anspruch 9, **dadurch gekennzeichnet, dass** wenigstens eine quer zur Schwenkachse offene Klammer (AK) an dem zweiten Teilkörper (T2) die Schwenkachse (RO) um mehr als 180° umgreift.

11. Fächerbesen nach Anspruch 10, **dadurch gekennzeichnet, dass** die Klammer (AK) zum Lösen des zweiten Teilkörpers (T2) von der Schwenkachse (RO) elastisch aufweitbar ist.

12. Fächerbesen nach einem der Ansprüche 1 bis 11, **dadurch gekennzeichnet, dass** zwischen den Teilkörpern (T1, T2) Führungsstrukturen (FN) als Einführhilfe für das Zusammenfügen der Teilkörper ausgebildet sind

13. Fächerbesen nach einem der Ansprüche 1 bis 12, **dadurch gekennzeichnet, dass** Zentrierstrukturen zwischen den beiden Teilkörpern (T1, T2) in der Arbeitsstellung in Eingriff sind und eine relative Verlagerung der Teilkörper quer zur Schwenkachse (RO) blockieren.

14. Fächerbesen nach einem der Ansprüche 1 bis 13, **dadurch gekennzeichnet, dass** an wenigstens einem, vorzugsweise an beiden Teilkörpern (T1, T2) Handgriffanordnungen (H1, H2) ausgebildet sind.

## Claims

1. Lawn rake with a carrier body and a plurality prongs, which form a complete sweeping area projecting from the carrier body,
wherein the carrier body is subdivided into two partial bodies, which are pivotable relative to each other in a pivot joint with a pivot axis and on each of which a plurality of prongs are arranged as partial sweeping areas,
wherein both partial bodies (T1, T2) are displaceable by pivoting about the pivot joint assembly from a working position, in which the partial bodies complement each other to form the carrier body and the partial sweeping areas (F1, F2) complement each other to form a complete sweeping area (BF), to a storage position, in which the partial bodies (T1, T2) are placed opposed to each other and in which the partial sweeping areas (F1, F2) are placed opposed to each other,
wherein the pivot joint assembly includes a rod or a tube (RO) as pivot axis, which is connected firmly with one of the partial bodies (T1),
wherein the pivot axis (RO) carries, at its remote end (SA) from the complete sweeping area, a connection structure for tool-free attachment and detachment of a device handle (ST), and
wherein the second partial body (T2) is pivotally supported on the pivot axis and articulated about the axial direction (AR),
**characterized in that**
the second partial body (T2) is held on the pivot axis in a manually releasable manner without tools.

2. Lawn rake according to claim 1, **characterized in that** the pivot angle between the working position and the storage position is at least 150°, in particular approximately 180°.

3. Lawn rake according to claim 2, **characterized in that** the partial bodies (T1, T2) are detachable from each other only in an intermediate position as a release position, which is spaced by a pivot angle from the working position and from the storage position.

4. Lawn rake according to claim 3, **characterized in that** the release position is offset by a pivot angle of at least 45° from the working position and from the storage position.

5. Lawn rake according to one of claims 1 to 4, **characterized in that** the complete sweeping area (BF) is approximately mirror-symmetrical with respect to center plane containing the pivot axis (AR).

6. Lawn rake according to one of claims 1 to 5, **characterized in that**, in the storage position, the prongs (Z1, Z2) of both partial sweeping areas (F1, F2) are placed with a gap therebetween and both partial sweeping areas overlap each other at the end of the prongs.

7. Lawn rake according to one of claims 1 to 6, **characterized in that** the separation point (FF) between both partial sweeping areas is offset from the extension of the pivot axis (AR) by at least one prong spacing.

8. Lawn rake according to one of claims 3 to 7, **characterized in that** in the release position the partial bodies (T1, T2) are detachable from each other with a relative movement (LB) transversely to the pivot axis (AR).

9. Lawn rake according to one of claims 1 to 8, **characterized in that** the pivot axis (RO) is fixedly connected (RF) with a first of the two partial bodies (T1) and the second partial body (T2) is releasable from the pivot axis (RO) in the release position.

10. Lawn rake according to claim 9, **characterized in that** at least a bracket (AK), which is open transversely to the pivot axis, surrounds the pivot axis (RO) at the second partial body (T2) by more than 180°.

11. Lawn rake according to claim 10, **characterized in that** the bracket (AK) is elastically expandable for the release of the second partial body (T2) from the pivot axis (RO).

12. Lawn rake according to one of claims 1 to 11, **characterized in that** guide structures (FN) are formed, between the partial bodies (T1, T2), as an insertion aid for the assembly of the partial bodies.

13. Lawn rake according to one of claims 1 to 12, **characterized in that** centering structures are in engagement between the partial bodies (T1, T2) in the working position and block a relative displacement of the partial bodies transverse to the pivot axis (RO).

14. Lawn rake according to one of claims 1 to 13, **characterized in that** handle assemblies (H1, H2) are formed at least one an preferably both partial bodies (T1, T2).

## Revendications

1. Râteau de pelouse avec un corps de support et une pluralité de griffes, qui forment une zone de balayage complète faisant saillie à partir du corps de support,
dans lequel le corps de support est subdivisé en deux corps partiels, qui peuvent pivoter l'un par rapport à l'autre dans une articulation de pivot avec un axe de pivotement et sur chacun desquels une pluralité de griffes sont agencées en tant que zones de balayage partielles,
dans lequel les deux corps partiels (T1, T2) sont déplaçables en pivotant autour de l'ensemble d'articulation de pivot d'une position de travail, dans laquelle les corps partiels se complètent pour former le corps de support et les zones de balayage partielles (F1, F2) se complètent pour former une zone de balayage complète (BF), jusqu'à une position de stockage, dans laquelle les corps partiels (T1, T2) sont placés l'un en face de l'autre et dans lesquels les zones partielles de balayage (F1, F2) sont opposées,
dans lequel l'ensemble d'articulation de pivot comprend une tige ou un tube (RO) comme axe de pivotement, qui est solidement relié à l'un des corps partiels (T1),
dans lequel l'axe de pivotement (RO) porte, à son extrémité (SA) distante de la zone de balayage complète, une structure de connexion pour la fixation et le détachement sans outil d'une poignée de dispositif (ST), et
dans lequel le deuxième corps partiel (T2) est supporté de façon pivotante sur l'axe de pivotement et articulé autour de la direction axiale (AR),
**caractérisé en ce que**
le deuxième corps partiel (T2) est maintenu sur l'axe de pivotement d'une manière libérable manuellement sans outils.

2. Râteau de pelouse selon la revendication 1, **caractérisé en ce que** l'angle de pivotement entre la position de travail et la position de stockage est d'au moins 150 °, en particulier d'environ 180°.

3. Râteau de pelouse selon la revendication 2, **caractérisé en ce que** les corps partiels (T1, T2) sont détachables l'un de l'autre seulement dans une position intermédiaire de dégagement, qui est écartée d'un angle de pivotement de la position de travail et de la position de stockage.

4. Râteau de pelouse selon la revendication 3, **caractérisé en ce que** la position de dégagement est écartée d'un angle de pivotement d'au moins 45° de la position de travail et de la position de stockage.

5. Râteau de pelouse selon l'une des revendications 1 à 4, **caractérisé en ce que** la zone de balayage complète (BF) est sensiblement symétrique par rapport au plan médian contenant l'axe de pivotement (AR).

6. Râteau de pelouse selon l'une des revendications 1 à 5, **caractérisé en ce que**, dans la position de stockage, le griffes (Z1, Z2) des deux zones de balayage partielles (F1, F2) sont placées avec un intervalle entre elles et les deux zones de balayage partiel se chevauchent à l'extrémité des griffes.

7. Râteau de pelouse selon l'une des revendications 1 à 6, **caractérisé en ce que** le point de séparation (FF) entre les deux zones de balayage partielles est décalé du prolongement de l'axe de pivotement (AR) d'au moins un écartement des griffes.

8. Râteau de pelouse selon l'une des revendications 3 à 7, **caractérisé en ce que** dans la position de dégagement les corps partiels (T1, T2) sont détachables l'un de l'autre avec un mouvement relatif (LB) transversalement à l'axe de pivotement (AR).

9. Râteau de pelouse selon l'une des revendications 1 à 8, **caractérisé en ce que** l'axe de pivotement (RO) est relié fixement (RF) à un premier des deux corps partiels (T1) et le second corps partiel (T2) est détachable de l'axe de pivotement (RO) dans la position de dégagement.

10. Râteau de pelouse selon la revendication 9, **caractérisé en ce qu'**au moins un support (AK), qui est ouvert transversalement à l'axe de pivotement, entoure l'axe de pivotement (RO) au niveau du deuxième corps partiel (T2) de plus de 180°.

11. Râteau de pelouse selon la revendication 10, **caractérisé en ce que** le support (AK) est extensible élastiquement pour la libération du deuxième corps partiel (T2) DE l'axe de pivotement (RO).

12. Râteau de pelouse selon l'une des revendications 1 à 11, **caractérisé en ce que** des structures de guidage (FN) sont formées, entre les corps partiels (T1, T2), en tant qu'aide d'insertion pour l'assemblage des corps partiels

13. Râteau de pelouse selon l'une des revendications 1 à 12, **caractérisé en ce que** des structures de centrage sont en engagement entre les corps partiels (T1, T2) en position de travail et bloquent un déplacement relatif des corps partiels transversaux à l'axe de pivotement (RO).

14. Râteau de pelouse selon l'une des revendications 1 à 13, **caractérisé en ce que** des ensembles de poignée (H1, H2) sont formés au niveau d'au moins un corps partiel, préférablement au niveau des deux corps partiels (T1, T2).
